# EUROPÄISCHE PATENTANMELDUNG

(11) **EP 2 253 422 A1**
(43) Veröffentlichungstag der Anmeldung: **24.11.2010**
(21) Anmeldenummer: 09013280.4
(22) Anmeldetag: 21.10.2009
(51) Int. Cl.: B23Q 7/04, B23D 45/02, B23D 47/04, B28D 1/04

(54) **Plattenbearbeitungsmaschine von Platten aus Stein, Holz, Metall und/oder deren Ersatzwerkstoffen**

(30) Priorität: 19.05.2009 DE 102009022784
(71) Anmelder: Burkhardt GmbH Maschinenfabrik, 95444 Bayreuth (DE)
(72) Erfinder: Mergner, Stephan, 95349 Thurnau (DE)
(74) Vertreter: LOUIS, PÖHLAU, LOHRENTZ

(57) **Zusammenfassung**

Es handelt sich um eine Plattenbearbeitungsmaschine zum Bearbeiten von Platten (10) aus Stein, Holz, Metall und/oder deren Ersatzwerkstoffen.

Die Maschine weist einen Arbeitsbereich (11) auf mit einer Auflagereinrichtung (12), um die Platten (10) jeweils während der Bearbeitung, vorzugsweise horizontal angeordnet, aufzunehmen.

Ferner weist die Maschine einen Bearbeitungskopf (1) auf mit einem Werkzeugantriebsmotor (1 a) mit abtriebsseitig angeordnetem Werkzeug (1 b).

Außerdem weist die Maschine eine Bewegungseinrichtung (20; 2, 3, 4) auf, die derart ausgebildet ist, dass sie den Bearbeitungskopf (1) motorisch angetrieben in drei Raumrichtungen x, y und z translatorisch bewegt und um eine erste, vorzugsweise horizontale Drehachse (Aa) und um eine zweite, vorzugsweise vertikale Drehachse (Ac) rotatorisch bewegt.

Wesentlicher Bestandteil der Maschine ist eine Manipuliereinrichtung (1c, 1c) mit einem Manipulierorgan (1c) oder mehreren Manipulierorganen (1c, 1c) zum Transferieren der Platten (10) und/oder Teile der Platten (10) vor und/oder während und/oder nach der Bearbeitung der Platten (10) durch das Werkzeug.

Es ist vorgesehen, dass das Manipulierorgan (1c) und/oder die Manipulierorgane (1c, 1c) an dem Bearbeitungskopf (1) derart bewegungsverbunden angeordnet ist bzw. sind, dass das bzw. die Manipulierorgan(e) (1c, 1 c) mit dem Bearbeitungskopf (1) bei der translatorischen Bewegung in den drei Raumrichtungen und/oder mit der Rotationsbewegung um die erste Drehachse (Aa) und um die zweite Drehachse (Ac) mitbewegt wird bzw. werden.

## Beschreibung

Die Erfindung geht aus von einer Plattenbearbeitungsmaschine zum Bearbeiten von Platten aus Stein, Holz, Metall und/oder deren Ersatzwerkstoffen mit den Merkmalen des Oberbegriffs des Patentanspruchs 1.

Eine derartige gattungsgemäße Bearbeitungsmaschine ist in der EP 1 651 409 B1 beschrieben. Diese bekannte Maschine bildet den nächsten Stand der Technik. Der wesentliche Nachteil dieses Stands der Technik ist, dass die apparative Einrichtung des Bearbeitungskopfes und der Saugeinrichtung relativ aufwendig ist. Nachteilig ist auch, daß die als Sauger ausgebildeten Manipulierorgane separate Antriebseinrichtungen für ihre relativ zum Schneidkopf erforderliche Bewegung benötigen.

Der Erfindung liegt die Aufgabe zugrunde, Maschinen der gattungsgemäßen Art von ihrem konstruktiven Aufbau zu vereinfachen und eine praktikable Arbeitsweise mit diesen Maschinen zu ermöglichen.

Die Erfindung löst diese Aufgabe mit dem Gegenstand des Patentanspruchs 1. Bei dieser Lösung handelt es sich um eine Plattenbearbeitungsmaschine zum Bearbeiten von Platten aus Stein, Holz, Metall und/oder deren Ersatzwerkstoffe. Diese Plattenbearbeitungsmaschine weist einen Arbeitsbereich mit einer Auflagereinrichtung auf, um die Platten jeweils während der Bearbeitung, vorzugsweise horizontal angeordnet aufzunehmen. Sie weist ferner einen Bearbeitungskopf mit einem Werkzeugantriebsmotor mit abtriebsseitig angeordnetem Werkzeug auf sowie eine Bewegungseinrichtung, die derart ausgebildet ist, dass sie den Bearbeitungskopf motorisch angetrieben in drei Raumrichtungen x, y und z translatorisch bewegt und um eine erste, vorzugsweise horizontale Drehachse und um eine zweite, vorzugsweise vertikale Drehachse, rotatorisch bewegt. Ferner weist die Bearbeitungsmaschine eine Manipuliereinrichtung auf mit einem Manipulierorgan oder mehreren Manipulierorganen zum Transferieren der Platten und/oder Teile der Platten vor und/oder während und/oder nach der Bearbeitung der Platten durch das Werkzeug. Außerdem weist die Bearbeitungsmaschine eine vorzugsweise numerische Steuerungseinrichtung auf zur Steuerung der Funktionen und/oder Komponenten der Plattenbearbeitungsmaschine, insbesondere der motorischen Antriebe und/oder Schalteinrichtungen der Bewegungseinrichtung und/oder des Werkzeugantriebsmotors und/oder der Manipuliereinrichtung. Bei dieser Plattenbearbeitungsmaschine ist vorgesehen, dass das Manipulierorgan und/oder die Manipulierorgane an dem Bearbeitungskopf derart bewegungsverbunden angeordnet ist bzw. sind, dass das bzw. die Manipulierorgane mit dem Bearbeitungskopf bei der translatorischen Bewegung in den drei Raumrichtungen und/oder der Rotationsbewegung um die erste Drehachse und um die zweite Drehachse mitbewegt wird bzw. werden.

Dadurch dass das Manipulierorgan bzw. die Manipulierorgane bewegungsverbunden an dem Bearbeitungskopf angeordnet sind, das heißt bewegungsverbundenes oder starr verbundenes Teil des Bearbeitungskopfes sind, wird eine besonders praktikable Arbeitsweise der Bearbeitung der Platten möglich, denn die Werkzeugbearbeitung und das Manipulieren, insbesondere das Transferieren der Platten oder Teile der Platten vor und/oder während und/oder nach der Bearbeitung durch das Werkzeug kann in unmittelbar aufeinanderfolgenden Schritten erfolgen. Die Bearbeitung durch das Werkzeug, das als spanendes Werkzeug, z. B. Sägewerkzeug, Fräswerkzeug, Schleifwerkzeug, Polierwerkzeug usw. ausgebildet sein kann, kann unmittelbar aufeinanderfolgend zu einem Manipulieren der Platten oder Teile der Platten vor und/oder während und/oder nach der Bearbeitung der Platten durch das Werkzeug, erfolgen. Dadurch dass das Manipulierorgan bzw. die Manipulierorgane mit dem das Werkzeug tragenden Bearbeitungskopf jeweils mitbewegt werden, kann bei bevorzugten Ausführungen die Bewegungseinrichtung, das heißt die Führungs- und Antriebseinrichtung des Bearbeitungskopfes gleichzeitig auch die Bewegungseinrichtung des Manipulierorgans bzw. der Manipulierorgane bilden.

Zudem wird ein konstruktiv besonders kompakter Aufbau erhalten, wenn vorgesehen ist, dass der Werkzeugantriebsmotor mit dem Manipulierorgan oder den Manipulierorganen eine Baueinheit bildet, indem der Werkzeugantriebsmotor mit dem Manipulierorgan bzw. den Manipulierorganen bewegungsfest und/oder starr verbunden ist.

Bei bevorzugten Ausführungen ist vorgesehen, dass der Bearbeitungskopf und/oder die Baueinheit, umfassend den Werkzeugantriebsmotor mit Werkzeug und das Manipulierorgan bzw. die Manipulierorgane, um eine Drehachse drehbar ist, die parallel gerichtet ist zu der Erstreckungsfläche der im Arbeitsbereich angeordneten zu bearbeitenden Platten und/oder drehbar ist um eine Drehachse, die senkrecht gerichtet ist zu der Erstreckungsfläche der im Arbeitsbereich angeordneten zu bearbeitenden Platten.

Bei besonders bevorzugten Ausführungen ist der Bearbeitungskopf in einem Drehlager angeordnet, dessen Drehachse eine der Drehachsen der Bewegungseinrichtung bildet, um die der Bearbeitungskopf rotatorisch bewegbar ist. Vorzugsweise kann hierbei vorgesehen sein, dass dieses Drehlager mit der Bewegungseinrichtung des Bearbeitungskopfes verbunden ist oder Teil dieser Bewegungseinrichtung ist.

Besondere Vorteile ergeben sich mit Ausführungen, bei denen der Bearbeitungskopf um eine erste, vorzugsweise horizontale Drehachse der Bewegungseinrichtung in einem vorbestimmten Winkelbereich, vorzugsweise kleiner gleich 360° drehbar ist, ohne dass eine Behinderung der Drehbewegung durch das Werkzeug und/oder das Manipulierorgan bzw. die Manipulierorgane eintritt. Es kann auch vorgesehen sein, dass der Bearbeitungskopf in einem Drehlager angeordnet ist, dessen Drehachse die zweite, vorzugsweise vertikale Drehachse der Bewegungseinrichtung bildet, um die der Bearbeitungskopf rotatorisch bewegbar ist. Hierbei kann dieses Drehlager mit der Bewegungseinrichtung des Bearbeitungskopfes verbunden sein oder Teil dieser Bewegungseinrichtung sein.

Bei bevorzugten Ausführungen kann ein gemeinsamer Trägerkörper vorgesehen sein, an oder in dem der Werkzeugantriebsmotor und das Manipulierorgan bzw. die Manipulierorgane montiert sind. Der Werkzeugantriebsmotor und das Manipulierorgan bzw. die Manipulierorgane ist bzw. sind vorzugsweise unbeweglich, d.h. starr an dem Trägerkörper befestigt. Der Trägerkörper kann um ein erstes Drehlager, z. B. mit einer Drehachse, die parallel zu der genannten ersten vorzugsweise horizontalen Drehachse gerichtet ist, drehbar gelagert sein und dabei in einem zweiten Drehlager, vorzugsweise mit einer Drehachse die parallel zu der genannten zweiten vorzugsweise vertikalen Drehachse ist, drehbar gelagert sein. Dieses zweite Drehlager kann über eine entsprechende Supporteinrichtung in die genannten drei Raumrichtungen x, y und z bewegbar angetrieben sein.

Besondere Vorteile für den Arbeitsablauf und die Funktionalität ergeben sich mit Ausführungen, bei denen vorgesehen ist, dass an einer ersten Seite des Bearbeitungskopfes, vorzugsweise an einem abtriebsseitigen Ende des Werkzeugantriebsaggregats das Werkzeug angeordnet ist und an einer zweiten Seite des Bearbeitungskopfes, vorzugsweise an einem gegenüberliegenden Ende des Werkzeugantriebsmotors das Manipulierorgan oder die Manipulierorgane angeordnet ist bzw. sind. Diese Anordnung kann so ausgebildet sein, dass einerseits in der Eingriffsstellung des Werkzeugs mit der im Arbeitsbereich angeordneten zu bearbeitenden Platte das Manipulierorgan bzw. die Manipulierorgane von der Platte ohne Kontaktierung der Platte wegsteht bzw. wegstehen und dass andererseits in der Wirkstellung des Manipulierorgans mit der Platte, d.h. wenn das Manipulierorgan bzw. die Manipulierorgane mit der Platte in Eingriff ist bzw. sind, um die Platte zum Manipulieren zu halten, das Werkzeug von der Platte wegsteht ohne dabei die Platte zu kontaktieren.

Bei bevorzugten Ausführungen ist vorgesehen, dass an einer Seite und/oder an einem Ende des Bearbeitungskopfes das Werkzeug angeordnet ist und beiderseits des Werkzeugs jeweils ein Manipulierorgan angeordnet ist.

Bei bevorzugten Ausführungen mit mehreren Manipulierorganen an dem Bearbeitungskopf ist vorgesehen, dass die Manipulierorgane an dem Bearbeitungskopf so angeordnet sind, dass sie jeweils simultan in und außer Wirkstellung bringbar sind.

Bei konstruktiv besonders bevorzugten Ausführungen ist vorgesehen, dass der Arbeitskopf mindestens einen auskragenden Arm aufweist, an dessen freien Ende das Manipulierorgan angeordnet ist. Bei bevorzugten Ausführungen ist das Manipulierorgan an dem auskragenden Arm starr angeordnet. Wenn das Manipulierorgan an einem auskragenden Arm angeordnet ist, kann vorgesehen sein, dass der auskragende Arm starr mit dem Werkzeugantriebsmotor oder relativ beweglich zu dem Werkzeugantriebsmotor angeordnet ist. Bei bevorzugten Ausführungen ist der auskragende Arm und das Manipulierorgan unbeweglich mit dem Werkzeugantriebsmotor verbunden. Sie bilden den genannten Bearbeitungskopf der nur als ganzes beweglich ist, so dass der Werkzeugantriebsmotor immer gemeinsam, d.h. bewegungsfest mit dem Manipulierorgan bzw. den Manipulierorganen bewegt wird.

Eine funktionssichere Handhabung zum Manipulieren der Werkstücke ergibt sich mit Ausführungen bei denen vorgesehen ist, dass das Manipulierorgan oder die Manipulierorgane als Vakuumsauger oder Elektromagnet oder ein anderes Haftorgan ausgebildet ist bzw. sind. Bei Ausführungen mit Sauger können mehrere Saugfelder vorgesehen sein. Das heißt jeder Sauger kann eine Wirkfläche aufweisen, die aus mehreren Saugfeldern zusammengesetzt ist. Die Saugfelder können z. B. hinsichtlich des Flächeninhalts und/oder der Flächenform der Saugfläche unterschiedlich gestaltet sein.

Besondere Bearbeitungsvorteile ergeben sich mit bevorzugten Ausführungen, bei denen vorgesehen ist, dass dem Bearbeitungskopf eine Wasserdüse zugeordnet ist, und zwar vorzugsweise eine Wasserdüse, die mit dem Bearbeitungskopf bei der translatorischen Bewegung in zwei oder drei Raumrichtungen mitbewegt wird. Es kann hierbei vorzugsweise vorgesehen sein, dass die Wasserdüse unmittelbar an dem Werkzeugkopf oder an einem den Werkzeugkopf tragenden Bauteil, vorzugsweise einem Bauteil der Bewegungseinrichtung angeordnet ist.

Bei bevorzugten Ausführungen ist ein Werkzeugwechsel auf einfache Weise möglich. Hierfür kann der Werkzeugantriebsmotor abtriebsseitig eine lösbare Kupplungseinrichtung zum Werkzeugwechsel aufweisen, um unterschiedliche Werkzeuge, z. B. Sägewerkzeuge, Fräswerkzeuge, Schleifwerkzeuge, Polierwerkzeuge usw. anzuschließen.

Was die Antriebs- und Bewegungseinrichtung des Bearbeitungskopfes betrifft, ist bei bevorzugten Ausführungen ist vorgesehen, dass zur translatorischen Bewegung des Bearbeitungskopfes in x- und/oder y- und/oder z-Richtung jeweils in die betreffende Richtung sich erstreckende Träger und/oder Schienen und/oder Führungseinrichtungen vorgesehen sind, die relativ zueinander motorisch angetrieben verfahrbar sind.

Bei bevorzugten Ausführungen ist, wie bereits erwähnt, vorgesehen, dass zur rotatorischen Bewegung des Bearbeitungskopfes eine in z-Richtung gerichtete Drehachse, vorzugsweise vertikal ausgerichtet und eine parallel zur x-y-Ebene gerichtete Drehachse, vorzugsweise horizontal ausgerichtet vorgesehen ist. Vorzugsweise kann in diesem Zusammenhang vorgesehen sein, dass an dem freien Ende der in z-Richtung sich erstreckenden Träger und/oder Schienen und/oder Führungseinrichtung der Bearbeitungskopf angeordnet ist, vorzugsweise in einer Lagereinrichtung mit einer in z-Richtung ausgebildeten Drehachse und/oder einer Lagereinrichtung mit einer zur z-Richtung senkrechten Drehachse.

Bei bevorzugten Ausführungen ist vorgesehen, dass die Bewegungseinrichtung elektrische Antriebsmotoren aufweist, die mit einer Energieversorgungseinrichtung verbunden sind, vorzugsweise mit Schleppkettenaufbau.

Bei weiteren bevorzugten Ausführungen ist der Bearbeitungskopf mit einer Kühl- und /oder Schmiermittelversorgungseinrichtung verbunden, vorzugsweise mit Schleppkettenaufbau.

Ein besonders praktikabler Ablauf des gesamten Bearbeitungsvorgangs wird mit Ausführungen erhalten, die vorsehen, dass die Plattenbearbeitungsmaschine benachbart zu dem Arbeitsbereich mindestens eine eingangsseitige Auflagereinrichtung zur Aufnahme von noch zu bearbeitenden Platten aufweist und/oder mindestens eine ausgangsseitige Lagereinrichtung zur Aufnahme von bereits bearbeiteten Platten aufweist, wobei die Auflagereinrichtung bzw. die Auflagereinrichtungen so angeordnet ist bzw. sind, dass die Platten in Reichweite des Bearbeitungskopfes angeordnet sind und mittels des Manipulierorgans bzw. der Manipulierorgane zumindest zwischen der Auflagereinrichtung und dem Arbeitsbereich transferierbar sind.

Die Erfindung wird nun anhand von Ausführungsbeispielen näher erläutert. Es zeigen
- Fig. 1: ein erstes Ausführungsbeispiel der erfindungsgemäßen Plattenbearbeitungsmaschine in einer ersten Stellung des Bearbeitungskopfes in perspektivischen Teildarstellung;
- Fig. 2: die Plattenbearbeitungsmaschine in Fig. 1 in einer zweiten Stellung des Bearbeitungskopfes;
- Fig. 3: die Plattenbearbeitungsmaschine in Fig. 1 in einer dritten Stellung des Bearbeitungskopfes;
- Fig. 4: die Plattenbearbeitungsmaschine in Fig. 1 in einer vierten Stellung des Bearbeitungskopfes;
- Fig. 5: die Plattenbearbeitungsmaschine in Fig. 1 in einer Übersichtsdarstellung;
- Fig. 6: ein bevorzugtes Ausführungsbeispiel der Plattenbearbeitungsmaschine mit einer ersten Ausführung des Bearbeitungskopfes;
- Fig. 7: den Bearbeitungskopf in Fig. 6 mit senkrecht eingestelltem Werkzeug in einer Seitensicht;
- Fig. 8: den Bearbeitungskopf in Fig. 6 mit schräg eingestelltem Werkzeug;
- Fig. 9: den Bearbeitungskopf in Fig. 6 mit waagerecht eingestelltem Werkzeug;
- Fig. 10: eine zweite Ausführung des Werkzeugkopfes der Plattenbearbeitungsmaschine in Fig. 6;
- Fig. 11: eine dritte Ausführung des Werkzeugkopfes der Plattenbearbeitungsmaschine in Fig. 6;
- Fig. 12: den Bearbeitungskopf in Fig. 6 mit aufgenommener Platte in senkrechter Position;
- Fig. 13: den Arbeitskopf in Fig. 6 mit aufgenommener Platte in waagerechter Position;
- Fig. 14: die Plattenbearbeitungsmaschine in Fig. 6 in einer Übersichtsdarstellung.

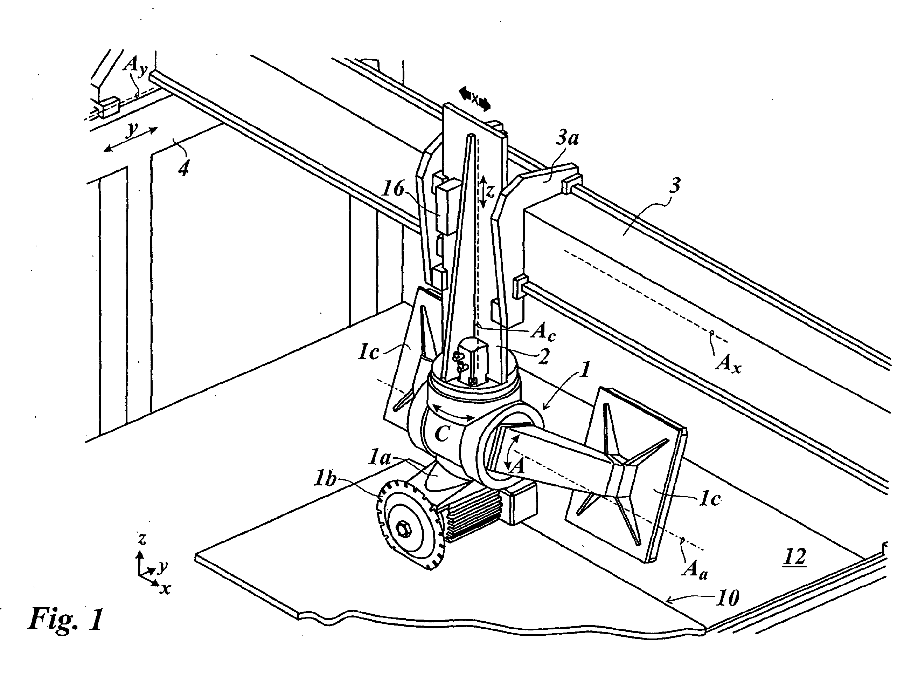

In den Figuren 1 bis 4 ist ein erstes Ausführungsbeispiel der erfindungsgemäßen Plattenbearbeitungsmaschine dargestellt.

Bei dem Ausführungsbeispiel handelt es sich um eine Bearbeitungsmaschine zum Bearbeiten von Platten 10 aus Stein, Holz, Metall oder deren Ersatzwerkstoffen.

Die Maschine weist einen Arbeitsbereich 11 mit einer Auflagereinrichtung 12 auf, um die Platten 10 jeweils während der Bearbeitung horizontal angeordnet aufzunehmen.

Die Maschine weist als wesentliche Komponente einen Bearbeitungskopf 1 auf, der einen Werkzeugantriebsmotor 1 a mit abtriebsseitig angeordnetem Werkzeug 1 b umfasst. Der Werkzeugantriebsmotor 1 a ist bei dem Ausführungsbeispiel als Elektromotor ausgebildet. Die Abtriebswelle weist eine präzise Drehlagerung auf. Ein solcher Antriebsmotor ist in der Praxis der Werkzeugmaschinen als Spindel bezeichnet. Bei dem Ausführungsbeispiel ist vorgesehen, dass an der Abtriebsseite des Motors 1 a unterschiedliche Werkzeuge wahlweise aufgenommen werden können, zum Beispiel Sägewerkzeug, Fräswerkzeug, Schleifwerkzeug oder Polierwerkzeug. In dem in den Figuren dargestellten Ausführungsbeispiel ist ein Kreissägeblatt als Sägewerkzeug eingesetzt. Der Werkzeugwechsel kann je nach Werkzeugaufnahme manuell bis hin zu vollautomatisiert erfolgen.

Der Bearbeitungskopf 1 ist über eine entsprechende Bewegungseinrichtung motorisch angetrieben bewegbar. Die Bewegungsachsen der Translationsbewegung sind in Figur 1 eingezeichnet und mit den Bezugszeichen Aₓ, A_{y}, A_{z} versehen. Diese Bewegungsachsen erstrecken sich in x-, y- und z-Richtung. Es handelt sich um orthogonale Koordinatenachsen x, y, z, die in der Figur 1 ebenfalls eingezeichnet sind. Die Drehachsen der Rotationsbewegung sind in Figur 1 ebenfalls eingezeichnet und mit den Bezugszeichen Aₐ und A_{c} versehen.

Als Führungseinrichtungen weist die Bewegungseinrichtung eine in horizontaler y-Richtung sich erstreckende ortsfeste Schieneneinrichtung 4 auf. Auf dieser Schieneneinrichtung 4 ist ein in horizontaler x-Richtung sich erstreckender Querträger 3 angeordnet. Dieser ist auf der Schieneneinrichtung 4 in horizontaler y-Richtung über einen in den Figuren nicht dargestellten Antriebsmotor verfahrbar. Auf dem Querträger 3 ist ein Läufer 3a in horizontaler x-Richtung über einen ebenfalls nicht dargestellten Antriebsmotor verfahrbar. In dem Läufer 3a ist ein sich in vertikaler z-Richtung erstreckender Träger 2 gelagert. Der Träger 2 ist über einen ebenfalls nicht dargestellten Antriebsmotor in dem Läufer 3a vertikal verfahrbar. Am Ende des Trägers 2 ist der Bearbeitungskopf 1 in einem Drehlager mit vertikaler Drehachse Ac gelagert. Der Bearbeitungskopf 1 ist außerdem um die in Figur 1 eingezeichnete horizontale Achse Aa drehbar gelagert.

Der Bearbeitungskopf 1 weist, wie oben bereits erwähnt, einen Werkzeugantriebsmotor 1a mit abtriebsseitig angeordnetem Werkzeug 1 b auf. Er ist erfindungsgemäß als Baueinheit, die eine Manipulatoreinrichtung mit umfasst, ausgebildet. In dem dargestellten Ausführungsbeispiel besteht die Manipulatoreinrichtung aus zwei Manipulatororganen, die als Saugorgane 1c ausgebildet sind. Diese Saugorgane 1c sind an dem Antriebsmotor 1a starr angeordnet. Jedes Saugorgan weist einen plattenförmigen Saugkopf mit Saugflächen als Wirkflächen auf. Der Saugkopf ist jeweils am freien Ende eines auskragenden Armes angeordnet. Die Saugorgane 1c sind somit mit ihren als Saugflächen ausgebildeten Wirkenden in starrer Anordnung zu dem Antriebsmotor 1 a angeordnet und bei der Bewegung des Bearbeitungskopfs 1 jeweils mitbewegt. Der Bearbeitungskopf 1 weist fünf Freiheitsgrade der Bewegung auf. Es handelt sich bei der Maschine damit um ein 5-Achs-Bearbeitungsmaschine. Zur Steuerung ist eine nicht dargestellte numerische Steuerung vorgesehen. Die Anordnung und Ausgestaltung der Manipulatoreinrichtung mit den Saugköpfen an den von dem Werkzeugantriebsmotor 1a auskragenden Armen ist so, dass die Manipulatororgane 1c die Bewegung des Bearbeitungskopfes bei der Werkzeugbearbeitung der Platte nicht behindern und umgekehrt das Werkzeug am Werkzeugantriebsmotor 1 a die Bewegung des Bearbeitungskopfes beim Manipulieren der Platten nicht behindert. Bei dem dargestellten Ausführungsbeispiel sind zwei Manipulatororgane 1 c an dem Werkzeugantriebsmotor 1a angeordnet, und zwar in entgegengesetzter Richtung von dem Werkzeugantriebsmotor 1 a abstehend jeweils am Ende eines auskragenden Armes. Die beiden auskragenden Arme sind in entgegengesetzter Richtung parallel zur horizontalen Drehachse gerichtet. Der Werkzeugantriebsmotor 1a ist somit zwischen diesen Manipulatororganen 1c angeordnet. An dem abtriebsseitigen Ende des Werkzeugantriebsmotors 1 a ist ein Werkzeuganschluss, an dem das Werkzeug 1b auswechselbar montiert ist. Das abtriebsseitige Ende des Werkzeugantriebsmotors 1 a ist rechtwinklig zu der Linie, in der die Manipulierorgane 1c liegen, versetzt, so dass die beiden Manipulatororgane 1 c und der Werkzeuganschluss mit dem Werkzeug 1 b in einer Dreiecksanordnung angeordnet sind.

Die verschiedenen Bearbeitungspositionen des Bearbeitungskopfes 1 sind in den Figuren näher dargestellt.
Figur 1 zeigt in perspektivischer Darstellung einen Ausschnitt des Ausführungsbeispiels der Maschine beim Sägevorgang. Die zu bearbeitende Platte 10 liegt im Arbeitsbereich im dargestellten Ausführungsbeispiel auf einem horizontalen Auflager 11 auf. Der Bearbeitungskopf 1 ist mit einem Kreissägeblatt 1 b bestückt, welches in der Schneidstellung in Figur 1 gerade in Schneideingriff mit der Platte 10 eingreift. Das Kreissägeblatt 1b ist in der Darstellung in Figur 1 aufgrund der dort dargestellten Stellung des Bearbeitungskopfs 1 vertikal angeordnet und führt somit einen Schnitt mit vertikaler Schnittfläche aus. Die an dem Bearbeitungskopf 1 angeordneten Manipulierorgane 1c, 1c sind in Figur 1 außer Wirkstellung der Platte 10.

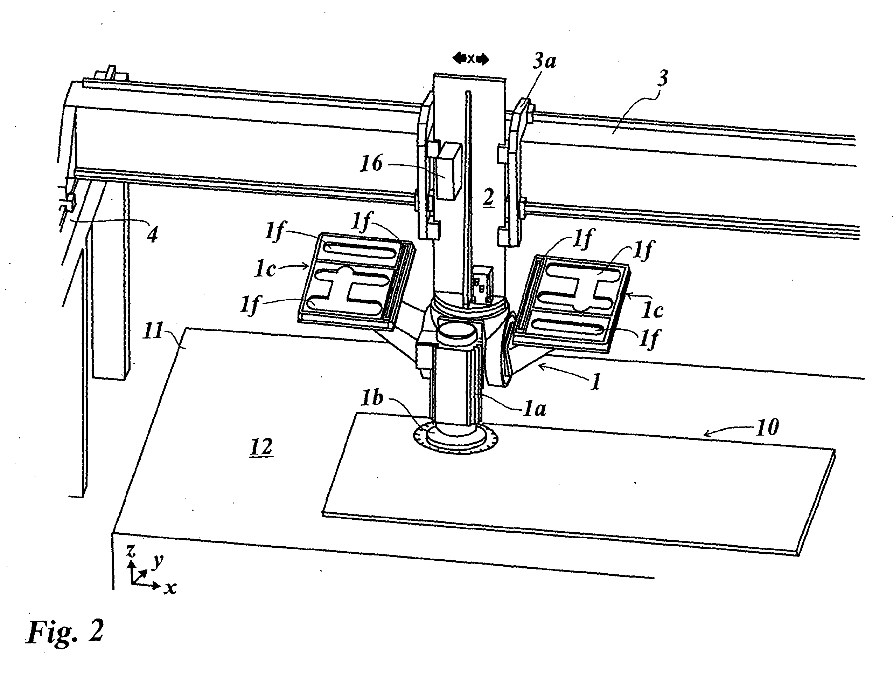

Figur 2 zeigt eine perspektivische Ansicht der Maschine in Figur 1, wobei jedoch der Bearbeitungskopf um seine horizontale Drehachse Aₐ gegenüber der Stellung in Figur 1 um 90° gedreht ist, sodass das Sägeblatt 1 b in Figur 2 parallel zur Erstreckungsebene der im Arbeitsbereich 11 aufliegenden Platte 10 angeordnet ist und die Saugorgane 1 c weiterhin außer Wirkstellung der Platte 10 sind.
In Figur 2 sind die Saugflächen 1f der plattenförmigen Wirkflächen der Manipulatororgane 1 c erkennbar. Die Wirkflächen jedes Manipulatororgans 1 c weisen jeweils drei Saugfelder mit jeweils einer Saugfläche 1f auf. Die Saugflächen 1f sind über umlaufende Dichtungen voneinander getrennt. Die Saugflächen 1f sind bei den drei Saugfeldern jeweils hinsichtlich ihres Flächeninhalts und hinsichtlich ihrer Flächenform unterschiedlich gestaltet.

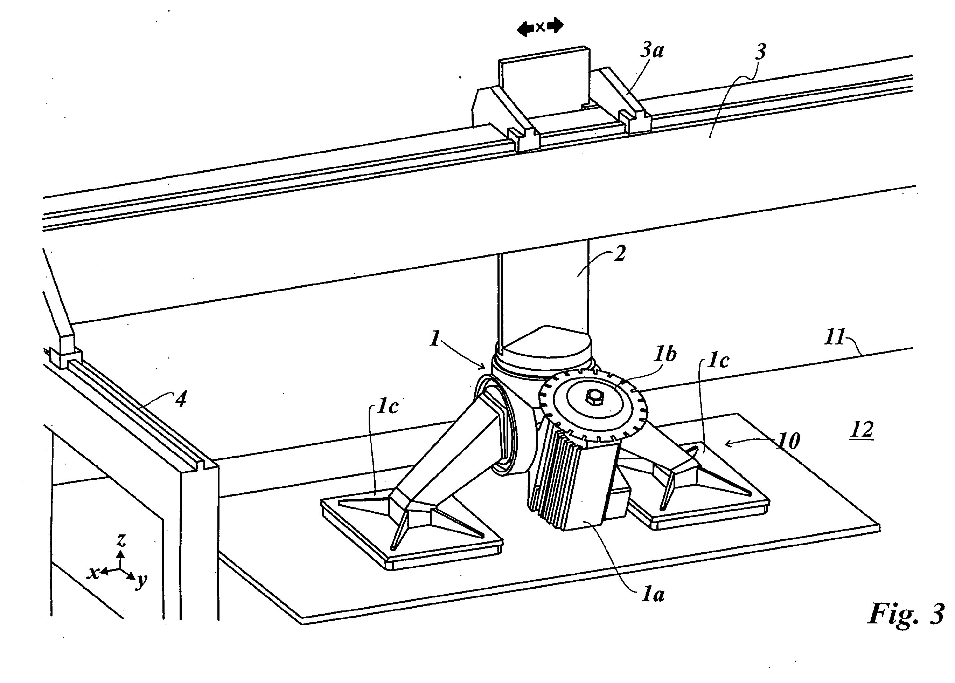

Figur 3 zeigt die Maschine mit dem Bearbeitungskopf 1 in Saugstellung. In dieser Drehstellung des Bearbeitungskopfs 1 ist dieser gegenüber der Stellung in Figur 2 um 180° gedreht, sodass die Saugflächen 1f der Manipulierorgane in die Wirkstellung mit der Oberseite der auf dem Arbeitsbereich aufliegenden Platte 10 stehen. Das an dem Werkzeugantriebsmotor 1 a abtriebsseitig angeordnete Sägeblatt 1 b steht dabei außer Eingriff.

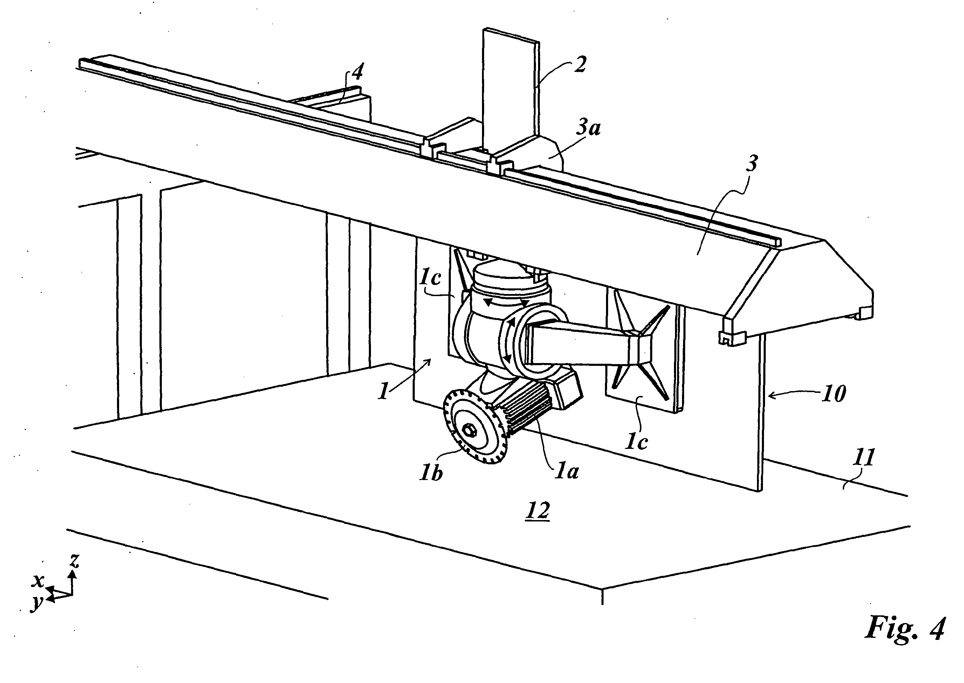

Figur 4 zeigt die Maschine ebenfalls in einer Saugstellung, wie Figur 3. In Figur 4 ist der Bearbeitungskopf jedoch gegenüber der Stellung in Figur 3 vertikal nach oben verfahren und um die horizontale Drehachse Aₐ um 90° geschwenkt, sodass die an den Saugflächen der Manipulierorgane 1c angesaugt gehaltene Platte 10 vertikal ausgerichtet angehoben ist.

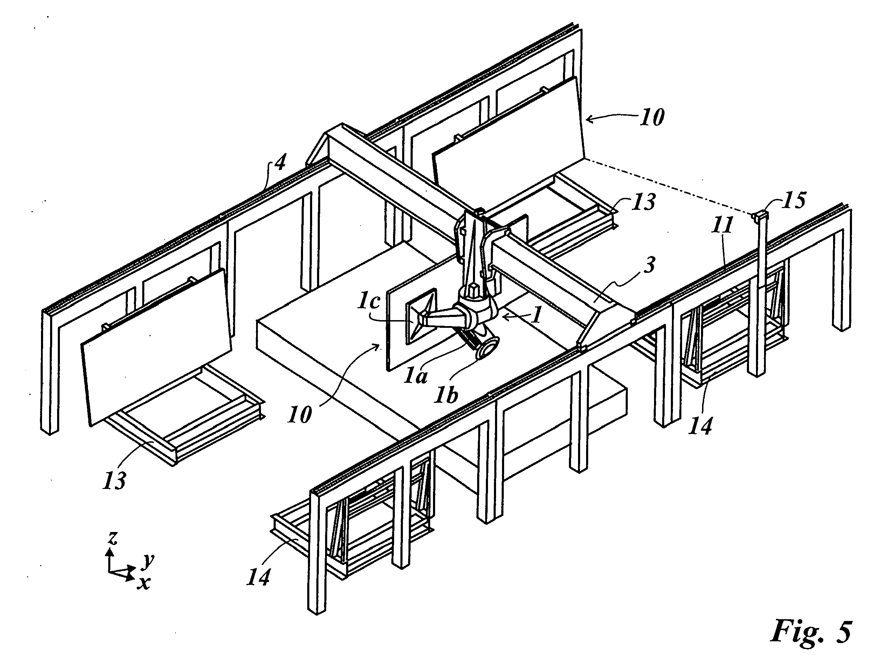

In Figur 5 ist die Maschine in einer größeren Gesamtheit dargestellt. Der Bearbeitungskopf 1 mit der daran angesaugten Platte 10 ist um die vertikale Drehachse A_{c} um 90° gegenüber der Stellung in Figur 1 gedreht. Der Bearbeitungskopf 1 mit der daran angesaugten vertikal ausgerichteten Platte 10 wird gerade auf den in x-Richtung sich erstreckenden Träger 3 verfahren, um die Platte 10, die zuvor von einer eingangsseitigen Lagereinrichtung 13 über den Bearbeitungskopf 1 durch die Manipulierorgane 1c aufgenommen worden ist, auf dem Arbeitsbereich 11 abzulegen. Hierfür ist eine Drehung des Bearbeitungskopfs um die horizontale Drehachse Aₐ erforderlich und sodann ein Absenken des Bearbeitungskopf durch Vertikalverschiebung des in z-Richtung sich erstreckenden Trägers 2.

In den Figuren nicht dargestellt ist eine Energieversorgungseinrichtung des Bearbeitungskopfes 1, das heißt elektrische Zuleitungen für den Werkzeugantriebsmotor 1 a und für die diversen Antriebsmotoren zwecks der Bewegung des Betätigungskopfes. Weitere Energieversorgungsleitungen sind als Saugzuleitungen für die Saugeinrichtung der Saugorgane 1c des Bearbeitungskopfes 1 vorgesehen. Diese sämtlichen Energieversorgungsleitungen können in Schleppketten ausgebildet sein, das heißt eine Schleppkette auf der ortsfesten Schieneneinrichtung 4, eine Schleppkette auf dem horizontalen Querträger 3 und eine weitere Schleppkette auf dem vertikalen Träger 2.

Bei bevorzugten Ausführungen ist eine Kühlmittel- und Schmiermittelversorgungseinrichtung für den Bearbeitungskopf 1 und gegebenenfalls für weitere Komponenten vorgesehen. Die Zuleitungen können ebenfalls als Schleppketten ausgebildet sein, entsprechend wie vorangehend beschrieben. Es sind auch Ausführungen vorgesehen, bei denen die Welle des Werkzeugantriebsmotors hohl gebohrt ist zwecks Zuführung eines Kühl- und/oder Schmiermittels zum Werkzeug.

Anstelle der verfahrbaren Träger- und Schieneneinrichtungen 2, 3, 4 können bei abgewandelten Ausführungsbeispielen zur Bewegung des Bearbeitungskopfes auch Roboterarmeinrichtungen vorgesehen sein. Der Bewegungsablauf des Bearbeitungskopfes 1 kann über die Roboterarmeinrichtung entsprechend ausgeführt sein wie bei dem dargestellten Ausführungsbeispiel.

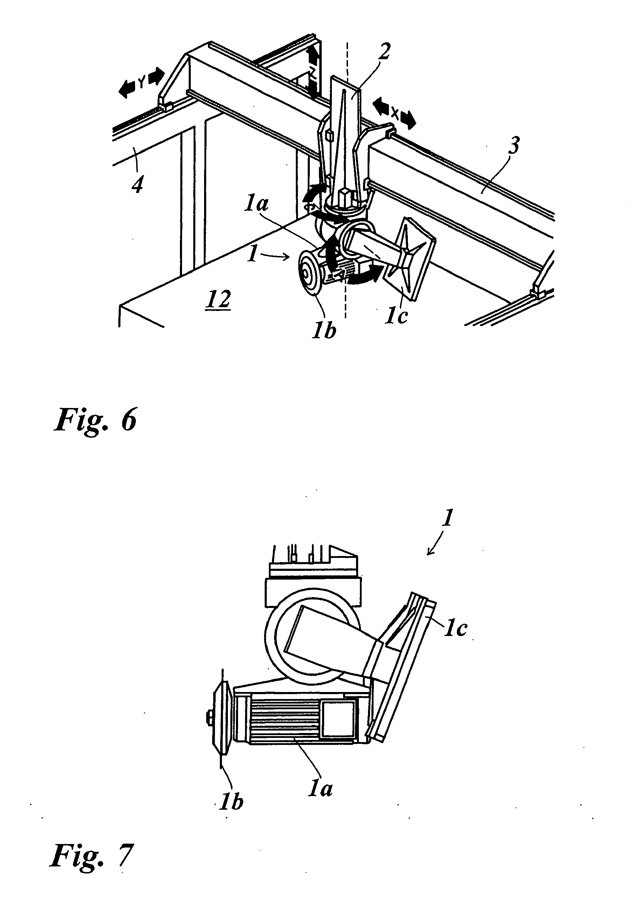

Im Nachfolgenden wird anhand weiterer Figuren 6 bis 14 für ein bevorzugtes Ausführungsbeispiel der Aufbau der Maschine und die Arbeitsweise nochmal näher beschrieben. Bei dem dargestellten Ausführungsbeispiel handelt es sich um eine 5-Achs-Bearbeitungsmaschine mit Manipulator zum Bearbeiten von Platten aus Stein, Holz, Metall und deren Ersatzwerkstoffe mit konventioneller oder numerischer (NC) Steuerung.

Die Maschine besitzt einen beweglichen Kopf, nachfolgend Werkzeugkopf 1 genannt, zur Aufnahme eines Elektromotors 1 a oder einer Motorspindel. Zusätzlich ist am Werkzeugkopf ein Manipulator 1 c (siehe nachfolgende Beschreibung) angeflanscht. Der Werkzeugkopf kann mittels dreier translatorischer Achsen horizontal in X- und Y-Richtung und vertikal in Z-Richtung bewegt werden. Zusätzlich kann der Werkzeugkopf mittels einer vertikal angeordneten rotatorischen C-Achse und einer horizontal angeordneten rotatorischen A-Achse um jeweils 360 Grad geschwenkt werden (Fig. 6).

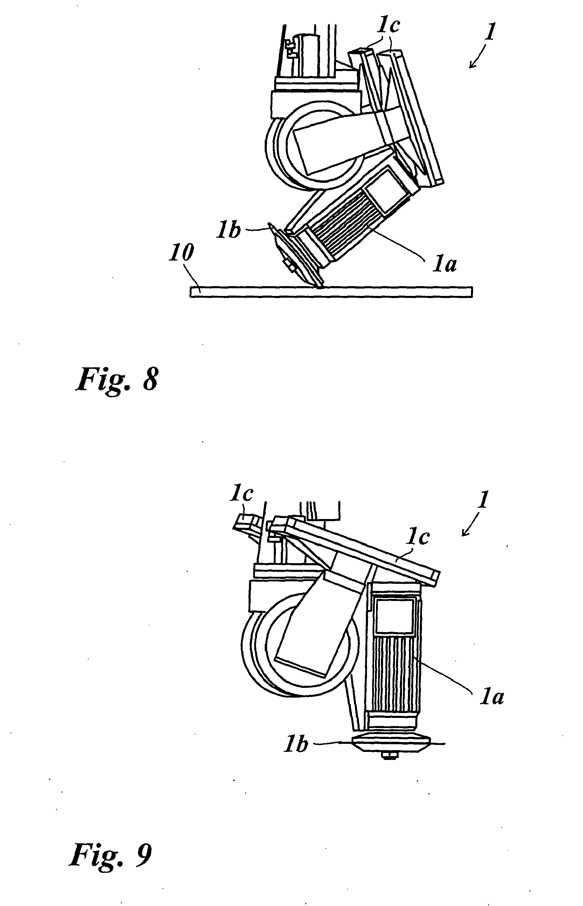

An die Motoraufnahme kann ein Sägemotor 1 a angebaut werden. Der Sägemotor 1 a nimmt verschiedenartige Sägeblätter 1 b auf. Damit können folgende Bearbeitungen ausgeführt werden
- Horizontal gestellter Sägemotor 1a (Motorwelle horizontal): Vertikalschnitte in Längs- und Querrichtung und bei Einsatz einer NC-Steuerung auch in diagonaler Richtung. Bei Einsatz einer numerischen Steuerung (NC) können auch Konturen gesägt werden (Fig. 7).
- Durch Schwenken des Motors 1 a kann die Motorachse motorisch stufenlos in jeden Winkel im Bereich von 0 bis 90 Grad zur Horizontalen geschwenkt werden (Fig. 8). Dadurch sind auch Schrägschnitte und Horizontalschnitte (senkrecht gestellte Motorachse) möglich (Fig. 9). Bei Einsatz einer numerischen Steuerung (NC) können bei senkrecht gestellter Motorachse auch Konturen gesägt werden.
- Je nach verwendeten Kühl- und Schmiermittel und Einsatz von angepassten Sägeblättern 1 b und Drehzahlen können Platten aus den verschiedensten Materialien und Größen verarbeitet werden. Kühlmittel wird hierbei von außen an das Sägeblatt 1 b, bzw. zu bearbeitende Material geführt.

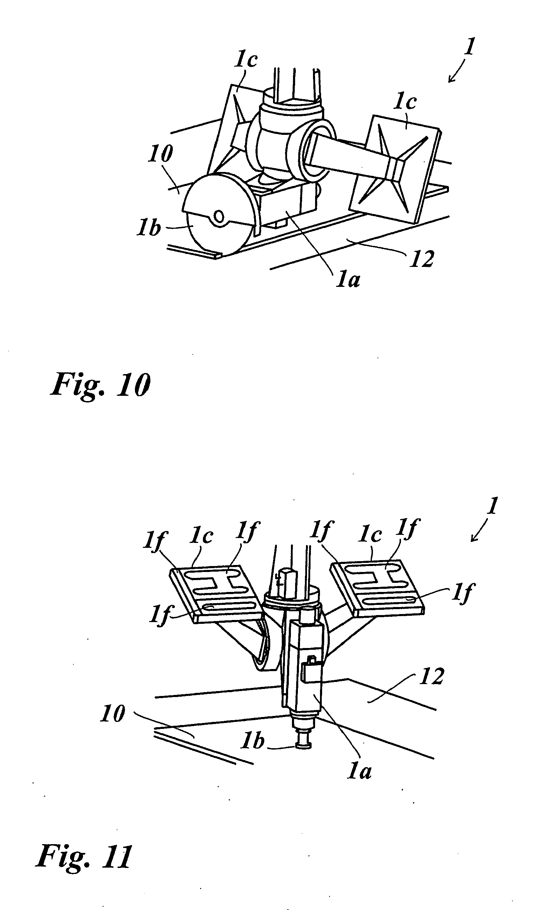

An die Motoraufnahme kann alternativ anstelle des Sägemotors 1 a eine Bearbeitungsspindel (Motorspindel) angebaut werden. An die Spindel können Fräs-, Schleif-, Polier- und Sägewerkzeuge (Sägeblätter) angebaut werden. Der Werkzeugwechsel kann, je nach Werkzeugaufnahme, manuell bis hin zu voll automatisiert erfolgen. Die Werkzeuge können auch mit Innenschmierung und - kühlung betrieben werden, da die Motorspindel mit zentraler Kühl-, bzw. Schmiermittelzuführung (gebohrte Spindelwelle mit Dreheinführung) ausgestattet werden kann. Folgende Bearbeitungen können ausgeführt werden.
- Es können bei Aufnahme eines Sägeblattes 1 b die gleichen Bearbeitungen wie oben mit dem Sägemotor beschrieben ausgeführt werden. Der Sägeblattwechsel kann je nach Ausstattung der Spindel auch vollautomatisch erfolgen (Automatische Werkzeugwechseleinrichtung) (Fig. 10).
- Durch Aufnahme von Fräs-, Schleif-, oder Polierköpfen können die zu bearbeitenden Platten mit sämtlichen typischen Bearbeitungen versehen werden, also z. B. Fräsen von Konturen (Randbearbeitung); Fräsen von Rillen, Fasen und dergleichen; Planfräsen von Oberflächen, etc.; Schleifen und Polieren der Plattenoberfläche, von Kanten, Fasen und der Ränder (Fig. 11).

Energie- und Kühlmittelzuführungen werden flexibel entlang der Achsen geführt.

Alle Achsen werden motorisch über ein Getriebe angetrieben.

Zusätzlich kann die Maschine mit einem Wasserstrahlschneidkopf ausgestattet werden. Die Wasserstrahlschneideinrichtung wird benutzt, um nicht gerade Konturen zu schneiden. Der Wasserstrahlschnitt stellt somit eine Ergänzung zum herkömmlichen Sägen dar. Diese Kombination ist bekannter Stand der Technik. Die Kombination mit der oben beschriebenen Manipulatoreinheit ist jedoch noch nicht bekannt.

Weiterhin wird die Maschine immer mit einer Manipulatoreinrichtung ausgestattet. Diese Einrichtung ist immer am Werkzeugkopf angebracht. Manipulatoreinrichtung und Motor (oder die Spindel) sind relativ zueinander nicht beweglich. Somit führen die Manipulatoreinrichtung und Motor (oder die Spindel) die gleichen Bewegungen aus.

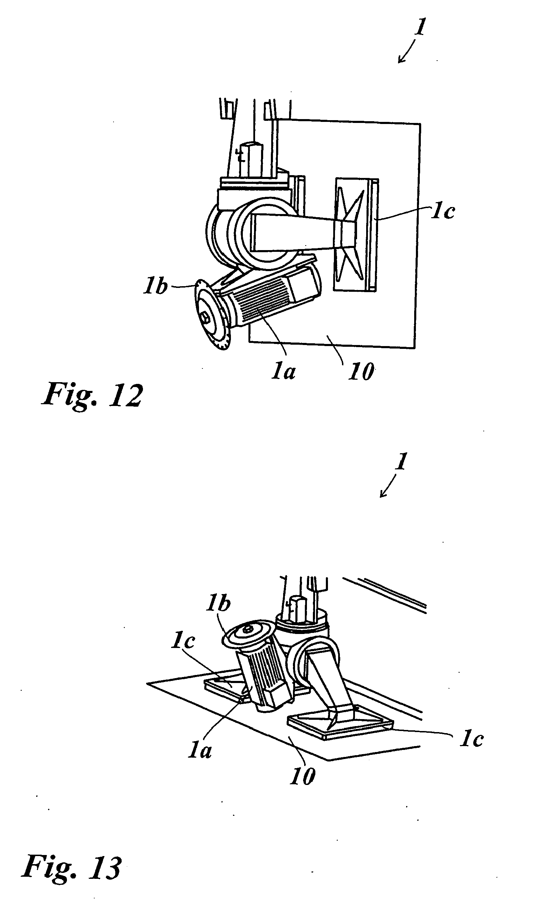

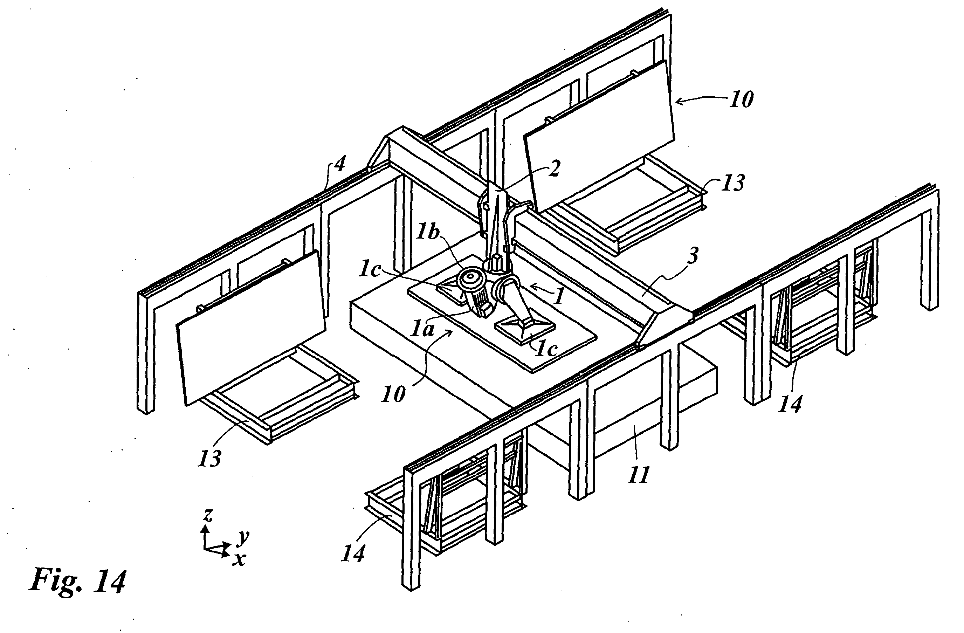

- Die Manipulatoreinrichtung besteht aus ein oder mehreren Saugerplatten, die wiederum in mehrere Saugfelder für das Anheben von unterschiedlich großen Platten unterteilt sind (Kundenspezifische Anpassung): Die einzelnen Platten und Saugfelder könne variabel mit Unterdruck beaufschlagt werden.
- Da die Manipulatoreinrichtung an der Motoraufnahme angebracht ist, kann die Manipulatoreinrichtung die gleichen Bewegungen wie der Motor ausführen. Somit kann die angesaugte Platte mit allen Freiheitsgraden einer 5-Achs-Maschine bewegt werden (Fig. 12, 13).
- Bei einer möglichen Anlagenkonfiguration werden z. B. die auf dem Beladebock stehenden Platten vom Manipulator aufgenommen und auf den Tisch zum Bearbeiten abgelegt und von dort aus nach der Bearbeitung auf einem anderen oder dem selben Bock abgestellt (Fig. 14).

Um Bearbeitungspausen zu minimieren, können die zum Bearbeiten bereitgestellten Platten zum Erfassen der Kontur (bekannter Stand der Technik) bereits auf dem Beladebock fotografiert werden. Alternativ kann das Fotografieren auch auf dem Tisch in Warteposition erfolgen.

Zusammenfassend kann gesagt werden: Es handelt sich bei bevorzugten Ausführungen der Erfindung um eine 5-Achs-Bearbeitungsmaschine mit Manipulator zum Bearbeiten von Platten aus Stein, Holz, Metall und deren Ersatzwerkstoffen mit konventioneller oder numerischer (NC) Steuerung.

Aufbau und Funktion der Maschine ist wie folgt:
Die Maschine besitzt einen beweglichen Kopf, nachfolgend Spindelkopf genannt, zur Aufnahme eines Elektromotors oder einer Motorspindel. Der Spindelkopf kann mittels dreier translatorischer Achsen horizontal X- und Y-Richtung und vertikal in Z-Richtung bewegt werden. Zusätzlich kann der Spindelkopf mittels einer vertikal angeordneten rotatorischen C-Achse und einer horizontal angeordneten rotatorischen A-Achse um jeweils 360 Grad geschwenkt werden.

An die Motoraufnahme kann ein Sägemotor angebaut werden. Der Sägemotor nimmt verschiedenartige Sägeblätter auf: Damit können folgende Bearbeitungen ausgeführt werden:
- Horizontal gestellter Sägemotor (Motorwelle horizontal): Vertikalschnitte in Längs- und Querrichtung und bei Einsatz einer NC-Steuerung auch in diagonaler Richtung. Bei Einsatz einer numerischen Steuerung (NC) können auch Konturen gesägt werden.
- Durch Schwenken des Motors kann die Motorachse motorisch stufenlos in jeden Winkel im Bereich von 0 bis 90 Grad zur Horizontalen geschwenkt werden. Dadurch sind auch Schrägschnitte und Horizontalschnitte (senkrecht gestellte Motorachse) möglich. Bei Einsatz einer numerischen Steuerung (NC) können bei senkrecht gestellter Motorachse auch Konturen gesägt werden.
- Je nach verwendeten Kühl- und Schmiermittel und Einsatz von angepassten Sägeblättern und Drehzahlen können Platten aus den verschiedensten Materialien und Größen verarbeitet werden. Kühlmittel wird hierbei von außen an das Sägeblatt, bzw. zu bearbeitende Material geführt.

An die Motoraufnahme kann alternativ anstelle des Sägemotors eine Bearbeitungsspindel (Motorspindel) angebaut werden. An die Spindel können Fräs-, Schleif-, Polier- und Sägewerkzeuge (Sägeblätter) angebaut werden. Der Werkzeugwechsel kann -je nach Werkzeugaufnahme - manuell bis hin zu voll automatisiert erfolgen. Die Werkzeuge können auch mit Innenschmierung und - kühlung betrieben werden, da die Motorspindel mit zentraler Kühl-, bzw. Schmiermittelzuführung (gebohrte Spindelwelle mit Dreheinführung) ausgestattet werden kann. Folgende Bearbeitungen können ausgeführt werden.
- Es können bei Aufnahme eines Sägeblattes die gleichen Bearbeitungen wie oben mit dem Sägemotor beschrieben ausgeführt werden. Der Sägeblattwechsel kann je nach Ausstattung der Spindel auch vollautomatisch erfolgen (Automatische Werkzeugwechseleinrichtung).
- Durch Aufnahme von Fräs-, Schleif-, oder Polierköpfen können die zu bearbeitenden Platten mit sämtlichen typischen Bearbeitungen versehen werden, also z. B. Fräsen von Konturen (Randbearbeitung); Fräsen von Rillen, Fasen und dergleichen; Planfräsen von Oberflächen, etc.; Schleifen und Polieren der Plattenoberfläche, von Kanten, Fasen und der Ränder.

Energie- und Kühlmittelzuführungen werden flexibel entlang der Achsen geführt. Alle Achsen werden motorisch über ein Getriebe angetrieben.

Zusätzlich kann die Maschine mit einem Wasserstrahlschneidkopf ausgestattet werden. Die Wasserstrahlschneideinrichtung wird benutzt, um nicht gerade Konturen zu schneiden. Der Wasserstrahlschnitt stellt somit eine Ergänzung zum herkömmlichen Sägen dar. Diese Kombination ist bekannter Stand der Technik. Die Kombination mit der oben beschriebenen Manipulatoreinheit ist jedoch noch nicht bekannt.

Die Maschine ist mit einer Manipulatoreinrichtung ausgestattet. Diese Einrichtung ist am Spindelkopf angebracht. Manipulatoreinrichtung und Motor (oder die Spindel) sind relativ zueinander nicht beweglich. Somit führen die Manipulatoreinrichtung und Motor (oder die Spindel) die gleichen Bewegungen aus.
- Die Manipulatoreinrichtung besteht aus ein oder mehreren Saugerplatten, die wiederum in mehrere Saugfelder für das Anheben von unterschiedlich großen Platten unterteilt sind (Kundenspezifische Anpassung): Die einzelnen Platten und Saugfelder könne variabel mit Unterdruck beaufschlagt werden.
- Da die Manipulatoreinrichtung an der Motoraufnahme angebracht ist, kann die Manipulatoreinrichtung die gleichen Bewegungen wie der Motor ausführen. Somit kann die angesaugte Platte mit allen Freiheitsgraden einer 5-Achs-Maschine bewegt werden. Z. B. werden die auf dem Beladebock stehenden Platten vom Manipulator aufgenommen und auf den Tisch zum Bearbeiten abgelegt und von dort aus nach der Bearbeitung auf einem anderen oder dem selben Bock abgestellt.

Um Bearbeitungspausen zu minimieren, können die zum Bearbeiten bereitgestellten Platten zum Erfassen der Kontur (bekannter Stand der Technik) bereits auf dem Beladebock fotografiert werden. Alternativ kann das Fotografieren auch auf dem Tisch in Warteposition erfolgen.

### Bezugszeichenliste

- 1: Bearbeitungskopf
- 1 a: Werkzeugantriebsmotor
- 1 b: Werkzeug
- 1 c: Manipulierorgan/Saugorgan
- 2: in z-Richtung sich erstreckender Träger
- 3: in x-Richtung sich erstreckender Träger
- 3a: Läufer auf Träger 3 verfahrbar
- 4: in y-Richtung sich erstreckende Schieneneinrichtung
- 10: Platte
- 11: Arbeitsbereich
- 12: Auflagereinrichtung von 11
- 13: eingangsseitige Auflagereinrichtung
- 14: ausgangsseitige Auflagereinrichtung
- 15: Fotokamera
- 16: Wasserdüse
- Aa: erste Drehachse des Bearbeitungskopfs 1/ horizontal ausgerichtet
- Ac: zweite Drehachse des Bearbeitungskopfs 1/ vertikal gerichtet
- Ax: Längsachse des Trägers 3
- Ay: Längsachse der Schieneneinrichtung 4

## Patentansprüche

1. Plattenbearbeitungsmaschine zum Bearbeiten von Platten (10) aus Stein, Holz, Metall und/oder deren Ersatzwerkstoffen
- mit einem Arbeitsbereich (11) mit einer Auflagereinrichtung (12), um die Platten (10) jeweils während der Bearbeitung, vorzugsweise horizontal angeordnet, aufzunehmen,
- mit einem Bearbeitungskopf (1) mit einem Werkzeugantriebsmotor (1 a) mit abtriebsseitig angeordnetem Werkzeug (1 b),
- mit einer Bewegungseinrichtung (20; 2, 3, 4), die derart ausgebildet ist, dass sie den Bearbeitungskopf (1) motorisch angetrieben in drei Raumrichtungen x, y und z translatorisch bewegt und um eine erste, vorzugsweise horizontale Drehachse (Aa) und um eine zweite, vorzugsweise vertikale Drehachse (Ac) rotatorisch bewegt,
- mit einer Manipuliereinrichtung (1 c, 1 c) mit einem Manipulierorgan (1 c) oder mehreren Manipulierorganen (1 c, 1 c) zum Transferieren der Platten (10) und/oder Teile der Platten (10) vor und/oder während und/oder nach der Bearbeitung der Platten (10) durch das Werkzeug,
- mit einer vorzugsweise numerischen Steuerungseinrichtung zur Steuerung der Funktionen und/oder Komponenten der Plattenbearbeitungsmaschine, insbesondere der motorischen Antriebe und/oder Schalteinrichtungen der Bewegungseinrichtung (20) und/oder des Werkzeugantriebsmotor (1a) und/oder der Manipuliereinrichtung (1c),
**dadurch gekennzeichnet,**
**dass** das Manipulierorgan (1c) und/oder die Manipulierorgane (1c, 1c) an dem Bearbeitungskopf (1) derart bewegungsverbunden angeordnet ist bzw. sind, dass das bzw. die Manipulierorgan(e) (1c, 1 c) mit dem Bearbeitungskopf (1) bei der translatorischen Bewegung in den drei Raumrichtungen und/oder mit der Rotationsbewegung um die erste Drehachse (Aa) und um die zweite Drehachse (Ac) mitbewegt wird bzw. werden.

2. Bearbeitungsmaschine nach Anspruch 1,
**dadurch gekennzeichnet,**
**dass** das Werkzeugantriebsmotor mit dem Manipulierorgan (1 c, 1 c) oder den Manipulierorganen (1 c, 1 c) eine Baueinheit bildet, indem der Werkzeugantriebsmotor mit dem Manipulierorgan (1 c, 1 c) bzw. den Manipulierorganen (1 c, 1 c) bewegungsfest und/oder starr verbunden ist.

3. Bearbeitungsmaschine nach Anspruch 1 oder 2,
**dadurch gekennzeichnet,**
**dass** der Bearbeitungskopf (1) und/oder die Baueinheit aus Werkzeugantriebsmotor mit Werkzeug und Manipulatororgan (1 c) bzw. Manipulatororganen (1c, 1c) um eine Drehachse (Aa) drehbar ist, die parallel gerichtet ist zu der Erstreckungsfläche der im Arbeitsbereich (11) angeordneten zu bearbeitenden Platte (10) und/oder um eine Drehachse (Ac) drehbar ist, die senkrecht gerichtet ist zu der Erstreckungsfläche der im Arbeitsbereich (11) angeordneten zu bearbeitenden Platte (10).

4. Bearbeitungsmaschine nach einem der vorangehenden Ansprüche, **dadurch gekennzeichnet,**
**dass** der Bearbeitungskopf (1) in einem Drehlager angeordnet ist, dessen Drehachse eine der Drehachsen (Aa, Ac) der Bewegungseinrichtung bildet, um die der Bearbeitungskopf (1) rotatorisch bewegbar ist.

5. Bearbeitungsmaschine nach einem der vorangehenden Ansprüche, **dadurch gekennzeichnet,**
**dass** an einer ersten Seite des Bearbeitungskopfs (1) das Werkzeug (1 b) angeordnet ist und an einer zweiten Seite des Bearbeitungskopfs (1) das Manipulierorgan (1c, 1 c) oder die Manipulierorgane (1 c, 1c) angeordnet ist bzw. sind,
wobei diese Anordnung so ausgebildet ist, dass in der Eingriffsstellung des Werkzeugs (1b) mit der im Arbeitsbereich angeordneten zu bearbeitenden Platte (10) das Manipulierorgan (1c, 1c) bzw. die Manipulierorgane (1c, 1c) von der Platte (10) ohne Kontaktierung der Platte (10) wegsteht bzw. wegstehen und dass in der Wirkstellung des Manipulierorgans (1c, 1c) mit der Platte das Werkzeug (1 b) von der Platte (10) ohne Kontaktierung der Platte (10) wegsteht.

6. Bearbeitungsmaschine nach einem der vorangehenden Ansprüche, **dadurch gekennzeichnet,**
**dass** an einer Seite und/oder an einem Ende des Bearbeitungskopfes (1) das Werkzeug (1 b) angeordnet ist und beiderseits des Werkzeugs (1 b) jeweils ein Manipulierorgan (1c, 1c) angeordnet ist.

7. Bearbeitungsmaschine nach einem der vorangehenden Ansprüche, **dadurch gekennzeichnet,**
**dass** der Arbeitskopf (1) mindestens einen auskragenden Arm aufweist, an dessen freiem Ende das Manipulierorgan (1c) angeordnet ist.

8. Bearbeitungsmaschine nach Anspruch 7,
**dadurch gekennzeichnet,**
**dass** das Manipulierorgan (1c) an dem auskragenden Arm starr angeordnet ist.

9. Bearbeitungsmaschine nach Anspruch 7 oder 8,
**dadurch gekennzeichnet,**
**dass** der auskragende Arm starr mit dem Werkzeugantriebsmotor (1a) oder relativ beweglich zu dem Werkzeugantriebsmotor (1 a) angeordnet ist.

10. Bearbeitungsmaschine nach einem der vorangehenden Ansprüche, **dadurch gekennzeichnet,**
**dass** das Manipulierorgan (1 c, 1 c) oder die Manipulierorgane (1 c, 1 c) als Vakuumsauger oder Elektromagnet oder anderes Haftorgan ausgebildet ist bzw. sind.

11. Bearbeitungsmaschine nach einem der vorangehenden Ansprüche, **dadurch gekennzeichnet,**
**dass** mehrere Manipulierorgane (1c, 1c) an dem Bearbeitungskopf (1) so angeordnet sind, dass sie jeweils simultan in und außer Wirkstellung kommen.

12. Bearbeitungsmaschine nach einem der vorangehenden Ansprüche, **dadurch gekennzeichnet,**
**dass** dem Bearbeitungskopf (1) eine Wasserdüse (16) zugeordnet ist, die mit dem Bearbeitungskopf (1) bei der translatorischen Bewegung in zwei oder drei Raumrichtungen mitbewegt wird.

13. Bearbeitungsmaschine nach Anspruch 12,
**dadurch gekennzeichnet,**
**dass** die Wasserdüse (16) unmittelbar an dem Werkzeugkopf (1) oder an einem den Werkzeugkopf (1) tragenden Bauteil, vorzugsweise einem Bauteil der Bewegungseinrichtung, angeordnet ist.

14. Bearbeitungsmaschine nach einem der vorangehenden Ansprüche, **dadurch gekennzeichnet,**
**dass** der Bearbeitungskopf (1) mit einer Kühl- und/oder Schmiermittelversorgungseinrichtung verbunden ist, vorzugsweise mit Schleppkettenaufbau.

15. Bearbeitungsmaschine nach einem der vorangehenden Ansprüche, **dadurch gekennzeichnet,**
**dass** die Plattenbearbeitungsmaschine benachbart zu dem Arbeitsbereich (11) mindestens eine eingangsseitige Auflagereinrichtung (13) zur Aufnahme von noch zu bearbeitenden Platten (10) aufweist und/oder mindestens eine ausgangsseitige Lagereinrichtung (14) zur Aufnahme von bereits bearbeiteten Platten aufweist, wobei die Auflagereinrichtung bzw. die Auflagereinrichtungen so angeordnet ist bzw. sind, dass die Platten in Reichweite des Bearbeitungskopfs angeordnet sind und mittels des Manipulierorgans bzw. der Manipulierorgane zumindest zwischen der Auflagereinrichtung und dem Arbeitsbereich transferierbar sind.
